# EUROPEAN PATENT APPLICATION

(11) **EP 2 528 154 A1**
(43) Date of publication of application: **28.11.2012**
(21) Application number: 11734612.2
(22) Date of filing: 18.01.2011
(51) Int. Cl.: H01M 10/0569, H01M 6/16, H01M 10/0525, H01M 10/0567

(54) **NONAQUEOUS ELECTROLYTE AND ELECTROCHEMICAL ELEMENT USING THE SAME**

(30) Priority: 19.01.2010 JP 2010009509
(71) Applicant: Ube Industries, Ltd., Ube-shi Yamaguchi 755-8633 (JP)
(72) Inventor: ABE, Koji, Tokyo 105-8449 (JP); KONDO, Masahide, Ube-shi Yamaguchi 755-8633 (JP)
(74) Representative: Gille Hrabal
(86) International application number: PCT/JP2011/050685
(87) International publication number: WO 2011/090006

(57) **Abstract**

A nonaqueous electrolytic solution capable of improving the low-temperature cycle properties, which is a nonaqueous electrolytic solution of an electrolyte salt dissolved in a nonaqueous solvent, wherein the nonaqueous solvent contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, and the content of the cyclic carbonate having a methyl group at least at 4-position of ethylene carbonate and/or the cyclic carbonate having a fluorine atom at least at 4-position of ethylene carbonate is from 1 to 40% by volume of the total volume of the nonaqueous solvent, and which contains trimethylene glycol sulfite in an amount of from 0.1 to 5% by mass, and an electrochemical element using the same.

## Description

### TECHNICAL FIELD

The present invention relates to a nonaqueous electrolytic solution capable of improving electrochemical characteristics, and to an electrochemical element using it.

### BACKGROUND ART

In recent years, electrochemical elements, especially lithium secondary batteries have been widely used as power supplies for electronic devices such as mobile telephones, notebook-size personal computers and the like, power supplies for electric vehicles, as well as for electric power storage, etc. These electronic devices and vehicles may be used in a broad temperature range, for example, at midsummer high temperatures or at frigid low temperatures, and are therefore required to be improved and well balanced in point of the cycle properties in a broad temperature range.
The lithium secondary battery is mainly constituted of a positive electrode and a negative electrode containing a material capable of absorbing and releasing lithium, and a nonaqueous electrolytic solution containing a lithium salt and a nonaqueous solvent. For the nonaqueous solvent, used are carbonates such as ethylene carbonate (EC), propylene carbonate (PC), etc.
As the negative electrode, known are metal lithium, and metal compounds (metal elemental substances, oxides, alloys with lithium, etc.) and carbon materials capable of absorbing and releasing lithium. In particular, a lithium secondary battery using a carbon material capable of absorbing and releasing lithium, such as coke, artificial graphite, natural graphite or the like, has been widely put into practical use.

For example, it is known that, in a lithium secondary battery using a highly-crystalline carbon material such as natural graphite, artificial graphite or the like as the negative electrode material therein, the decomposed product or gas generated through reductive decomposition of the solvent in the nonaqueous electrolytic solution on the surface of the negative electrode during charging detracts from the electrochemical reaction favorable for the battery, therefore worsening the cycle properties of the battery. Deposition of the decomposed product of the nonaqueous solvent interferes with smooth absorption and release of lithium by the negative electrode, and therefore, in particular, the cycle properties at low temperatures may be thereby often worsened.
In addition, it is known that a lithium secondary battery using a lithium metal or its alloy, or a metal elemental substance such as tin, silicon or the like or its metal oxide as the negative electrode material therein may have a high initial battery capacity but its battery performance such as battery capacity and cycle properties greatly worsens, since the micronized powdering of the material is promoted during cycles thereby bringing about accelerated reductive decomposition of the nonaqueous solvent, as compared with the negative electrode of a carbon material. In addition, the micronized powdering of the negative electrode material and the deposition of the decomposed product of the nonaqueous solvent may interfere with smooth absorption and release of lithium by the negative electrode, and therefore, in particular, the cycle properties at low temperatures may be thereby often worsened.
On the other hand, it is known that, in a lithium secondary battery using, for example, LiCoO₂, LiMn₂O₄, LiNiO₂, LiFePO₄ or the like as the positive electrode, when the nonaqueous solvent in the nonaqueous electrolytic solution is in the charged state, the decomposed product or the gas locally generated through partial oxidative decomposition in the interface between the positive electrode material and the nonaqueous electrolytic solution interferes with the electrochemical reaction favorable for the battery, and therefore the battery performance such as cycle properties at low temperatures and others are thereby also worsened.

As in the above, the decomposed product and the gas generated through decomposition of the nonaqueous electrolytic solution on the positive electrode or the negative electrode may interfere with the movement of lithium ions or may swell the battery, and the battery performance is thereby worsened. Despite the situation, electronic appliances equipped with lithium secondary batteries therein are offering more and more an increasing range of functions and are being in a stream of further increase in the power consumption. With that, the capacity of lithium secondary batteries is being much increased, and the space volume for the nonaqueous electrolytic solution in the battery is decreased by increasing the density of the electrode and by reducing the useless space volume in the battery. Accordingly, the situation is that even decomposition of only a small amount of the nonaqueous electrolytic solution may worsen the battery performance at low temperatures.
Patent Reference 1 discloses a lithium ion secondary battery comprising a nonaqueous electrolytic solution that contains trimethylene glycol sulfite, saying that the battery is excellent in storage properties and cycle properties even at high temperatures.

As a lithium primary battery, for example, known is one in which the positive electrode is formed of manganese dioxide or fluorographite and the negative electrode is formed of lithium metal, and the lithium primary battery of the type is widely used as having a high energy density, which, however, is desired to be improved in point of the low-temperature cycle properties.
Recently, further, as a novel power source for electric vehicles or hybrid electric vehicles, electric storage devices have been developed, for example, an electric double layer capacitor using activated carbon or the like as the electrode from the viewpoint of the output density thereof, and a hybrid capacitor including a combination of the electric storage principle of a lithium ion secondary battery and that of an electric double layer capacitor (where both the capacity by lithium absorption and release and the electric double layer capacity are utilized); and it is desired to improve the low-temperature cycle properties of these capacitors.

### CITATION LIST

### PATENT REFERENCE

Patent Reference 1: JP-A 2005-228721

### SUMMARY OF THE INVENTION

### PROBLEMS THAT THE INVENTION IS TO SOLVE

An object of the present invention is to provide a nonaqueous electrolytic solution capable of improving low-temperature cycle properties, and to provide an electrochemical element using the nonaqueous electrolytic solution.

### MEANS FOR SOLVING THE PROBLEMS

The present inventors have investigated in detail the performance of the nonaqueous electrolytic solution in the above-mentioned Patent Reference 1. As a result, the nonaqueous electrolytic solution in Patent Reference 1 could not obtain a remarkable effect in point of low-temperature cycle properties.
Given the situation, the present inventors have assiduously studied for the purpose of solving the above-mentioned problems, and have found that, when a nonaqueous electrolytic solution of an electrolyte salt dissolved in a nonaqueous solvent contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, in which the content of the cyclic carbonate having a methyl group at least at 4-position of ethylene carbonate and/or the cyclic carbonate having a fluorine atom at least at 4-position of ethylene carbonate is from 1 to 40% by volume of the total volume of the nonaqueous solvent, and when the nonaqueous electrolytic solution contains trimethylene glycol sulfite in an amount of from 0.1 to 5% by mass, then the low-temperature cycle properties can be greatly improved, and have completed the present invention.
Specifically, the present invention provides the following (1) and (2):

(1) A nonaqueous electrolytic solution of an electrolyte salt dissolved in a nonaqueous solvent, in which the nonaqueous solvent contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, and the content of the cyclic carbonate having a methyl group at least at 4-position of ethylene carbonate and/or the cyclic carbonate having a fluorine atom at least at 4-position of ethylene carbonate is from 1 to 40% by volume of the total volume of the nonaqueous solvent, and which contains trimethylene glycol sulfite in an amount of from 0.1 to 5% by mass.

(2) An electrochemical element comprising a positive electrode, a negative electrode, and a nonaqueous electrolytic solution of an electrolyte salt dissolved in a nonaqueous solvent, wherein the nonaqueous solvent in the nonaqueous electrolytic solution contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, the content of the cyclic carbonate having a methyl group at least at 4-position of ethylene carbonate and/or the cyclic carbonate having a fluorine atom at least at 4-position of ethylene carbonate in the nonaqueous solvent is from 1 to 40% by volume of the total volume of the nonaqueous solvent, and the nonaqueous electrolytic solution contains trimethylene glycol sulfite in an amount of from 0.1 to 5% by mass.

### ADVANTAGE OF THE INVENTION

According to the present invention, there are provided a nonaqueous electrolytic solution capable of improving low-temperature cycle properties, and an electrochemical element using the nonaqueous electrolytic solution.

### MODE FOR CARRYING OUT THE INVENTION

### [Nonaqueous Electrolytic Solution]

The nonaqueous electrolytic solution of the present invention comprises an electrolyte salt dissolved in a nonaqueous solvent, and nonaqueous solvent in the nonaqueous electrolytic solution contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, in which the content of the cyclic carbonate having a methyl group at least at 4-position of ethylene carbonate and/or the cyclic carbonate having a fluorine atom at least at 4-position of ethylene carbonate is from 1 to 40% by volume of the total volume of the nonaqueous solvent, and the nonaqueous electrolytic solution contains trimethylene glycol sulfite in an amount of from 0.1 to 5% by mass.

Though not always clear, the reason why the nonaqueous electrolytic solution of the present invention can greatly improve low-temperate cycle properties may be considered as follows:
In case where trimethylene glycol sulfite is added to a nonaqueous electrolytic solution where the nonaqueous solvent contains only one type of a cyclic carbonate, a surface film derived from trimethylene glycol sulfite and having low lithium ion conductivity is formed on the surface of the negative electrode. Consequently, there occurs a problem in that, when low-temperature cycles are repeated, then Li deposits on the surface of the negative electrode to lower the cycle properties.
In the present invention, when trimethylene glycol sulfite is added to an electrolytic solution in which the nonaqueous solvent contains the above-mentioned, at least two specific cyclic carbonates, then the decomposed products of at least two different cyclic carbonates could be taken in the surface film as the constituent elements therein, and therefore a surface film having high lithium ion conductivity could be formed. Of the above-mentioned cyclic carbonates, in case where cyclic carbonates having a specific structure with a substituent of a methyl group or a fluorine atom as branched in the structure, such as the cyclic carbonate having a methyl group at least at 4-position of ethylene carbonate and/or the cyclic carbonate having a fluorine atom at least at 4-position of ethylene carbonate are contained in the electrolytic solution in an amount of from 1 to 40% by volume of the total volume of the nonaqueous solvent therein, then a surface film having especially high lithium ion conductivity could be formed, and it may be considered that a specific phenomenon of significantly improving low-temperature properties would occur.

### [Trimethylene Glycol Sulfite]

Trimethylene glycol sulfite to be used in the nonaqueous electrolytic solution of the present invention is represented by the following formula (I):

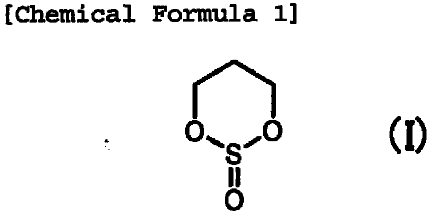

The content of trimethylene glycol sulfite is from 0.1 to 5% by mass of the nonaqueous electrolytic solution. When the content is at most 5% by mass, then there would be little risk of forming any excessive surface film on the electrode to worsen low-temperature properties; and when at least 0.1% by mass, then the surface film formation would be sufficient to enhance the effect of bettering low-temperature cycle properties. The content is preferably at least 0.1% by mass of the nonaqueous electrolytic solution, more preferably at least 0.3% by mass; and the upper limit thereof is preferably at most 5% by mass, more preferably at most 3% by mass, even more preferably at most 1% by mass.
Combining the nonaqueous solvent, the electrolyte salt and further other additives mentioned below exhibits a specific effect of synergistically improving low-temperature cycle properties. Though not always clear, it may be considered that a mixture surface film having a high ionic conductivity and comprising the constitutive elements derived from those nonaqueous solvent, electrolyte salt and further other additives could be formed.

### [Nonaqueous Solvent]

The nonaqueous solvent for use in the nonaqueous electrolytic solution of the present invention contains at least the following cyclic carbonates.

### (Cyclic Carbonates)

The nonaqueous solvent contains at least two cyclic carbonates selected from ethylene carbonate (EC), 1,2-butylene carbonate, a cyclic carbonate having a methyl group at least at 4-position of ethylene carbonate, and a cyclic carbonate having a fluorine atom at least at 4-position of ethylene carbonate.

The cyclic carbonate having a methyl group at least at 4-position of ethylene carbonate includes propylene carbonate (PC), trans or cis-2,3-butylene carbonate, etc.; and from the viewpoint of improving low-temperature cycle properties, preferred are propylene carbonate and/or trans or cis-2,3-butylene carbonate.

The cyclic carbonate having a fluorine atom at least at 4-position of ethylene carbonate includes 4-fluoro-1,3-dioxolan-2-one, trans or cis-4,5-difluoro-1,3-dioxolan-2-one, etc.; and from the viewpoint of improving low-temperature cycle properties, preferred are 4-fluoro-1,3-dioxolan-2-one (FEC) and/or trans or cis-4,5-difluoro-1,3-dioxolan-2-one (hereinafter the two are collectively called "FEC").

The content of the cyclic carbonate having a methyl group at least at 4-position of ethylene carbonate and/or the cyclic carbonate having a fluorine atom at least at 4-position of ethylene carbonate is, from the viewpoint of improving low-temperature cycle properties, from 1 to 40% by volume of the total volume of the nonaqueous solvent, but is preferably from 5 to 36% by volume, more preferably from 10 to 33% by volume, even more preferably from 15 to 30% by volume.
In case where the cyclic carbonate having a methyl group at least at 4-position of ethylene carbonate and the cyclic carbonate having a fluorine atom at least at 4-position of ethylene carbonate are combined here, the ratio by volume of the cyclic carbonate having a methyl group at least at 4-position of ethylene carbonate to the cyclic carbonate having a fluorine atom at least at 4-position of ethylene carbonate, (the cyclic carbonate having a methyl group at least at 4-position of ethylene carbonate)/(the cyclic carbonate having a fluorine atom at least at 4-position of ethylene carbonate) is preferably from 1/99 to 49/51, more preferably from 5/95 to 45/55, even more preferably from 10/90 to 40/60.

From the viewpoint of improving low-temperature cycle properties, at least two of the above-mentioned cyclic carbonates are used as combined, and more preferably at least three are used. Preferred combinations of the cyclic carbonates include EC and PC; FEC and EC; FEC and PC; EC and PC and FEC; DFEC and EC; DFEC and PC; DFEC and FEC; FEC and PC and DFEC; FEC and EC and PC and DFEC, etc. Of those combinations, more preferred combinations are EC and PC; FEC and PC; DFEC and PC; EC and FEC and PC, etc.; and even more preferred combinations are FEC and PC; EC and FEC and PC; FEC and PC and DFEC, etc.
Not specifically defined, the content of the cyclic carbonates is preferably within a range of from 10 to 40% by volume of the total volume of the nonaqueous solvent. When the content is less than 10% by volume, then the electric conductivity of the nonaqueous electrolytic solution may lower, and low-temperature cycle properties may worsen; but when more than 40% by volume, then low-temperature cycle properties may worsen since the viscosity of the nonaqueous electrolytic solution may increase. Consequently, the content preferably falls within the above-mentioned range.

### [Other Nonaqueous Solvents]

Other nonaqueous solvents than the above-mentioned cyclic carbonates and trimethylene glycol sulfite for use in the nonaqueous electrolytic solution of the present invention include linear esters, carbon-carbon double bond-containing cyclic carbonates, ethers, amides, phosphates, sulfones, lactones, nitriles, carboxylic acid anhydrides, aromatic compounds, other S=O bond-containing compounds than trimethylene glycol, etc.

### (Linear Esters)

The linear esters include asymmetric linear carbonates such as methyl ethyl carbonate (MEC), methyl propyl carbonate (MPC), methyl isopropyl carbonate (MIPC), methyl butyl carbonate, ethyl propyl carbonate, etc.; symmetric carbonates such as dimethyl carbonate (DMC), diethyl carbonate (DEC), dipropyl carbonate, dibutyl carbonate, etc.; linear carboxylates such as methyl propionate, ethyl propionate, methyl acetate, ethyl acetate, etc.; tertiary carboxylates such as methyl pivalate, butyl pivalate, hexyl pivalate, octyl pivalate, etc.
Of those, preferably, the nonaqueous solvent contains a linear carbonate having a methyl group from the viewpoint of improving low-temperature cycle properties, more preferably at least one of DMC, MEC, MPC and MIPC, even more preferably at least one of DMC and MEC. Also preferably, the nonaqueous solvent contains an asymmetric linear carbonate, more preferably an asymmetric linear carbonate and a symmetric linear carbonate as combined. Preferably, the proportion of the asymmetric linear carbonate in the linear carbonate is at least 50% by volume.
One type alone of these linear carbonates may be used here, but preferably two or more different types thereof are used as combined.
Not specifically defined, the total content of the linear esters is preferably from 60 to 90% by volume of the total volume of the nonaqueous solvent. When the content is less than 60% by volume, then the viscosity of the electrolytic solution may increase; but when more than 90% by volume, then the electric conductivity of the electrolytic solution lay lower, and battery characteristics such as load characteristics may worsen. Consequently, the content preferably falls within the above-mentioned range.
The ratio of the cyclic carbonate to the linear ester, cyclic carbonate/linear ester (ratio by volume) is preferably from 10/90 to 40/60, more preferably from 15/85 to 35/65, even more preferably from 20/80 to 30/70, from the viewpoint of improving low-temperature cycle properties.

The carbon-carbon double bond-containing cyclic carbonates include vinylene carbonate (VC), vinylethylene carbonate (VEC), etc.
The ethers include cyclic ethers such as tetrahydrofuran, 2-methyltetrahydrofuran, 1,3-dioxolan, 1,3-dioxane, 1,4-dioxane, etc.; linear ethers such as 1,2-dimethoxyethane, 1,2-diethoxyethane, 1,2-dibutoxyethane, etc.; the amides include dimethylformamide, etc.; the phosphates include trimethyl phosphate, tributyl phosphate, trioctyl phosphate, etc.; the sulfones include sulfolane, etc.; the lactones include γ-butyrolactone, γ-valerolactone, α-angelicalactone, etc.; the nitriles include acetonitrile, propionitrile, succinonitrile, glutaronitrile, adiponitrile, pimelonitrile, etc.; the carboxylic anhydrides include linear carboxylic anhydrides such as acetic anhydride, propionic anhydride, etc.; cyclic carboxylic anhydrides such as succinic anhydride, maleic anhydride, glutaric anhydride, itaconic anhydride, etc.

The aromatic compounds include aromatic compounds having a branched alkyl group, such as cyclohexylbenzene, fluorocyclohexylbenzene compounds (including 1-fluoro-2-cyclohexylbenzene, 1-fluoro-3-cyclohexylbenzene, and 1-fluoro-4-cyclohexylbenzene), tert-butylbenzene, tert-amylbenzene, an 1-fluoro-4-tert-butylbenzene, etc.; and aromatic compounds such as biphenyl, terphenyls (o-, m-, and p-form), diphenyl ether, fluorobenzene, difluorobenzene (o-, m-, and p-form), anisole, 2, 4-difluoroanisole, and partially hydrogenated terphenyls (including 1,2-dicyclohexylbenzene, 2-phenylbicyclohexyl, 1,2-diphenylcyclohexane, and o-cyclohexylbiphenyl), etc.
The other S=O bond-containing compounds than trimethylene glycol sulfite include sultone compounds such as 1,3-propanesultone, 1,3-butanesultone, 1,4-butanesultone, etc.; cyclic sulfite compounds such as ethylene sulfite, hexahydrobenzo[1,3,2]dioxathiolan-2-oxide (also referred to as 1,2-cyclohexanediol cyclic sulfite), 5-vinyl-hexahydro-1,3,2-benzodioxathiol-2-oxide, etc.; sulfonic acid ester compounds such as 1,2-ethanediol dimethanesulfonate, 1,2-propanediol dimethanesulfonate, 1,3-propanediol dimethanesulfonate, 1,4-butanediol dimethanesulfonate, 1,5-pentanediol dimethanesulfonate, 2-propynyl methanesulfonate, etc.; and vinyl sulfone compounds such as divinyl sulfone, 1,2-bis(vinylsulfonyl)ethane, bis(2-vinylsulfonylethyl) ether, etc.

Of the above-mentioned other nonaqueous solvents, in particular, combined use of at least one selected from carbon-carbon double bond-containing cyclic carbonates and other S=O bond-containing compounds than trimethylene glycol sulfite is preferred as enhancing the effect of improving low-temperature cycle properties.
As the carbon-carbon double bond-containing cyclic carbonate, preferred is vinylene carbonate (VC); and as the other S=O bond-containing compound than trimethylene glycol sulfite, preferred are sulfonic acid ester compounds, and more preferred are sulfonic acid ester compounds having an unsaturated group such as a carbon-carbon triple bond or having an alkylene chain with at least 5 carbon atoms. Of those, especially preferred is at least one selected from vinylene carbonate, 2-propynyl methanesulfonate and 1,5-pentanediol dimethanesulfonate.
When the amount of these compounds added is more than 5% by mass in the nonaqueous electrolytic solution, then it may worsen low-temperature cycle properties; and when less than 0.05% by mass, then it could not sufficiently attain the effect of improving low-temperature cycle characteristics. Accordingly, the content is preferably at least 0.05% by mass in the nonaqueous electrolytic solution, more preferably at least 0.5% by mass; and the upper limit thereof is preferably at most 5% by mass, more preferably at most 3% by mass.

### [Electrolyte Salt]

As the electrolyte salt for use in the present invention, preferably mentioned are the following lithium salts and onium salts.

### (Lithium Salt)

As the lithium salt, there are mentioned inorganic lithium salts such as LiPP₆, LiBF₄, LiClO₄, etc.; linear fluoroalkyl group-having lithium salts such as LiN(SO₂CF₃)₂, LiN(SO₂C₂F₅)₂, LiCF₃SO₃, LiC(SO₂CF₃)₃, LiPF₄(CF₃)₂, LiPF₃(C₂F₅)₃, LiPF₃(CF₃)₃, LiPF₃(iso-C₃F₇)₃, LiPF₅(iso-C₃F₇), etc.; cyclic fluoroalkylene chain-having lithium salts such as (CF₂)₂(SO₂)₂NLi, (CF₂)₃(SO₂)₂NLi, etc.; and lithium salts with an oxalate complex as the anion therein, such as lithium bis[oxalate-O,O']borate, lithium difluoro[oxalate-O,O']borate, etc. One alone or two or more different types of these electrolyte salts may be used here either singly or as combined.
Of those, especially preferred electrolyte salts are LiPF₆, LiBF₄, LiN(SO₂CF₃)₂ and LiN(SO₂C₂F₅)₂; and more preferred is combined use of LiPF₆ and at least one selected from LiBF₄, LiN(SO₂CF₃)₂ and LiN(SO₂C₂F₅)₂. Preferably, the ratio (by mol) of LiPF₆/[LiBF₄ or LiN(SO₂CF₃)₂ or LiN(SO₂C₂F₅)₂] falls within a range of from 70/30 to 99/1, more preferably within a range of from 80/20 to 98/2.

### (Onium Salt)

As the onium salt, preferably mentioned are various salts of a combination of an onium cation and an anion mentioned below.
Preferred examples of the onium cation include a tetramethylammonium cation, an ethyltrimethylammonium cation, a diethyldimethylammonium cation, a triethylmethylammonium cation, a tetraethylammonium cation, an N,N-dimethylpyrrolidinium cation, an N-ethyl-N-methylpyrrolidinium cation, an N,N-diethylpyrrolidinium cation, a spiro- (N,N') -bipyrrolidinium cation, an N,N'-dimethylimidazolinium cation, an N-ethyl-N'-methylimidazolinium cation, an N,N'-diethylimidazolinium cation, an N,N'-dimethylimidazoli um cation, an N-ethyl-N'-methylimidazolium cation, an N,N'-diethylimidazolium cation, etc.
Preferred examples of the anion include a PF₆ anion, a BF₄ anion, a ClO₄ anion, an AsF₆ anion, a CF₃SO₃ anion, an N(CF₃SO₂)₂ anion, an N(C₂F₅SO₂)₂ anion, etc.

The concentration of all these electrolyte salts as dissolved in the solution is generally preferably at least 0.3 M relative to the above-mentioned nonaqueous solvent, more preferably at least 0.5 M, even more preferably at least 0.7 M. The upper limit of the concentration is preferably at most 2.5 M, more preferably at most 2.0 M, even more preferably at most 1.5 M.

### [Production of Nonaqueous Electrolytic Solution]

The nonaqueous electrolytic solution of the present invention can be prepared, for example, by: mixing the nonaqueous solvents; adding the electrolyte salt to the mixture; and further dissolving therein trimethylene glycol sulfite in an amount of from 0.1 to 5% by mass.
In this case, the nonaqueous solvent to be used, and the compound to be added to the electrolytic solution are preferably previously purified within a range not significantly detracting from the producibility, in which, therefore, the impurity content is preferably as low as possible.

### [Electrochemical Element]

The electrochemical element of the present invention comprises a positive electrode, a negative electrode and a nonaqueous electrolytic solution of an electrolyte salt dissolved in a nonaqueous solvent, and is characterized in that the nonaqueous electrolytic solution is the above-mentioned nonaqueous electrolytic solution of the present invention. The electrochemical element includes the following first to fourth electrochemical elements.
As the nonaqueous electrolyte, usable here is not only a liquid one but also a gelled one. Further, the nonaqueous electrolytic solution of the present invention can also be used for solid polymer electrolytes. Above all, the solution is preferably used for the first electrochemical element (that is, for lithium batteries) or the fourth electrochemical element, (that is, for lithium ion capacitors), using a lithium salt as the electrolyte salt, more preferably for lithium batteries, and most preferably for lithium secondary batteries.

### [The First Electrochemical Element (lithium battery)]

The lithium battery of the present invention collectively means a lithium primary battery and a lithium secondary battery. The lithium battery of the present invention comprises a positive electrode, a negative electrode and a nonaqueous electrolytic solution of an electrolyte salt dissolved in a nonaqueous solvent. The other constitutive components such as the positive electrode and the negative electrode except for the nonaqueous electrolytic solution can be used with no particular limitation.

### (Lithium Secondary Battery)

As the positive electrode active material for the lithium secondary battery, usable is a complex metal oxide with lithium that contains at least one of cobalt, manganese and nickel. One kind of these positive electrode active materials can be used alone, or two or more kinds of them can be used in combination.
The lithium complex metal oxide includes, for example, LiCoO₂, LiMn₂O₄, LiNiO₂, LiCo₁₋ₓNiₓO₂ (0.01<x<1), LiCo_{1/3}Ni_{1/3}Mn_{1/3}O₂, LiNi_{1/2}Mn_{3/2}O₄, LiCo_{0.98}Mg_{0.02}O₂, etc. Combinations of LiCoO₂ and LiMn₂O₄; LiCoO₂ and LiNiO₂; LiMn₂O₄ and LiNiO₂ are acceptable herein.

For enhancing the safety of the battery in overcharging or enhancing cycle properties, or for enabling the use thereof at a charging potential of 4.3 V or more, a part of the lithium complex metal oxide may be substituted with any other element. For example, a part of cobalt, manganese and nickel may be substituted with at least one element of Sn, Mg, Fe, Ti, Al, Zr, Cr, V, Ga, Zn, Cu, Bi, Mo, La, etc.; or O may be partly substituted with S or F; or the oxide may be coated with a compound containing such other element.
Of those, preferred are lithium complex metal oxides such as LiCoO₂, LiMn₂O₄, and LiNiO₂, with which the positive electrode charging potential in a fully-charged state may be used at 4.3 V or more based on Li. More preferred are lithium complex metal oxides usable at 4.4 V or more, such as LiCo₁₋ₓMₓO₂ (where M represents at least one element of Sn, Mg, Fe, Ti, Al, Zr, Cr, V, Ga, Zn, and Cu; 0.001≤x≤0.05), LiCo_{1/3}Ni_{1/3}Mn_{1/3}O₂, LiNi_{1/2}Mn_{3/2}O₄, and a solid solution of Li₂MnO₃ and LiMO₂ (where M represents a transition metal such as Co, Ni, Mn, Fe or the like). When a lithium complex metal oxide capable of running at a higher charged voltage is used, the effect of improving low-temperature cycle properties may often worsen owing to the reaction with the electrolytic solution during charging. Of the lithium secondary battery according to the present invention, however, the electrochemical characteristics can be prevented from worsening.

Further, as the positive electrode active material, also usable are lithium-containing olivine-type phosphates. Especially preferred are lithium-containing olivine-type phosphates containing at least one selected from Fe, Co, Ni and Mn. Specific examples thereof include LiFePO₄, LiCoPO₄, LiNiPO₄, LiMnPO₄, etc.
The lithium-containing olivine-type phosphates may be partly substituted with any other element. For example, a part of iron, cobalt, nickel, and manganese therein may be substituted with at least one element selected from Co, Mn, Ni, Mg, Al, B, Ti, V, Nb, Cu, Zn, Mo, Ca, Sr, W, and Zr; or the phosphates may be coated with a compound containing any of these other elements or with a carbon material. Among these, preferred are LiFePO₄ and LiMnPO₄.
Further, the lithium-containing olivine-type phosphate may be combined with, for example, the above-mentioned positive electrode active materials.

The pH at room temperature of the supernatant prepared by dispersing 10 g of the above-mentioned positive electrode active material in 100 ml of distilled water is preferably from 10.0 to 12.5 as the effect of enhancing low-temperature cycle properties can be further markedly augmented, and is more preferably from 10.5 to 12.0.
In case where an element Ni is contained in the positive electrode, impurities such as LiOH in the positive electrode active material may increase and the case is therefore preferred as the effect of enhancing low-temperature cycle properties can also be markedly augmented. More preferably, the atomic concentration of Ni in the positive electrode active material is from 5 to 25 atomic %, even more preferably from 8 to 21 atomic %.

Not specifically defined, the electroconductive agent of the positive electrode may be any electron-conductive material not undergoing chemical change. For example, it includes graphites such as natural graphite (flaky graphite, etc.), artificial graphite, etc.; carbon blacks such as acetylene black, Ketjen black, channel black, furnace black, lamp black, thermal black, etc. Graphites and carbon blacks may be combined suitably. The amount of the electroconductive agent to be added to the positive electrode mixture is preferably from 1 to 10% by mass, more preferably from 2 to 5% by mass.

The positive electrode may be formed by mixing the above-mentioned positive electrode active material with an electroconductive agent such as acetylene black, carbon black or the like, and with a binder such as polytetrafluoroethylene (PTFE), polyvinylidene fluoride (PVDF), styrene/butadiene copolymer (SBR), acrylonitrile/butadiene copolymer (NBR), carboxymethyl cellulose (CMC), ethylene/propylene/diene terpolymer or the like, then adding thereto a high-boiling point solvent such as 1-methyl-2-pyrrolidone or the like, and kneading them to give a positive electrode mixture, thereafter applying the positive electrode mixture onto an aluminium foil or a stainless lath plate or the like serving as a collector, and drying and shaping it under pressure, and then heat-treating it in vacuum at a temperature of from 50°C to 250°C or so for about 2 hours.
The density of the part except the collector of the positive electrode may be generally at least 1.5 g/cm³, and for further increasing the capacity of the battery, the density is preferably at least 2 g/cm³, more preferably at least 3 g/cm³, even more preferably at least 3.6 g/cm³. The upper limit is preferably at most 4 g/cm³.

As the negative electrode active material, usable are one or more of lithium metal, lithium alloys, carbon materials (graphites such as artificial graphite, natural graphite, etc.) capable of absorbing and releasing lithium, and metal compounds capable of absorbing and releasing lithium, either singly or as combined.
As the carbon material capable of absorbing and releasing lithium, preferred are readily-graphitizable carbon, non-graphitizable carbon where the lattice (002) spacing is at least 0.37 nm, graphite where the lattice (002) spacing is at most.0.34 nm, etc.
Of those, preferred is use of high-crystalline carbon materials such as artificial graphite, natural graphite and the like, in view of the advanced ability thereof to absorb and release lithium ions, and more preferred is use of a carbon material having a graphite-type crystal structure where the lattice (002) spacing (d₀₀₂) is at most 0.340 nm (nanometers), especially from 0.335 to 0.337 nm.
When artificial graphite particles having a bulky structure where plural flattened graphite fine particles aggregate or bond together non-parallel to each other, or graphite particles produced through treatment of spheronization comprising repeatedly imparting mechanical action such as compression force, friction force, shear force or the like to, for example, flaky natural graphite particles are used, and when the ratio of the peak intensity I (110) of the (110) plane of the graphite crystal obtained in X-ray diffractometry of a negative electrode sheet as formed by pressing so that the density of the part except the collector of the negative electrode could be 1.5 g/cm³, to the peak intensity I (004) of the (004) plane thereof, I(110)/I(004) is at least 0.01, then low-temperature cycle properties can be markedly improved. More preferably, the ratio is at least 0.05, even more preferably at least 0.1. On the other hand, when too much processed, the crystallinity may worsen and the discharge capacity of batteries may lower; and therefore, the upper limit is at most 0.5, more preferably at most 0.3.

The metal compound capable of absorbing and releasing lithium includes compounds containing at least one metal element of Si, Ge, Sn, Pb, P, Sb, Bi, Al, Ga, In, Ti, Mn, Fe, Co, Ni, Cu, Zn, Ag, Mg, Sr, Ba, etc. These metal compounds may have any morphology of simple substances, alloys, oxides, nitrides, sulfides, borides, alloys with lithium or the like; but preferred are any of simple substances, alloys, oxides and alloys with lithium, as capable of increasing the capacity of batteries. Above all, more preferred are those containing at least one element selected from Si, Ge and Sn, and even more preferred are those containing at least one element selected from Si and Sn, as capable of increasing the capacity of batteries.

The negative electrode may be formed, using the same electroconductive agent, binder and high-boiling point solvent as in the formation of the above-mentioned positive electrode. These are mixed and kneaded to give a negative electrode mixture, then the negative electrode mixture is applied onto a copper foil or the like serving as a collector, then dried and shaped under pressure, and thereafter heat-treated in vacuum at a temperature of from 50°C to 250°C or so for about 2 hours.
The density of the part except the collector of the negative electrode may be generally at least 1.1 g/cm³, and for further increasing the capacity of batteries, the density is preferably at least 1.5 g/cm³, more preferably at least 1.7 g/cm³. The upper limit is preferably at most 2 g/cm³.

The structure of the lithium secondary battery is not specifically defined. The battery may be a coin-shaped battery, a cylindrical battery, a square-shaped battery, or a laminate-type battery, each having a single-layered or multi-layered separator.
The separator for the battery is not specifically defined, for which usable is a single-layer or laminate porous film of polyolefin such as polypropylene, polyethylene or the like, as well as a woven fabric, a nonwoven fabric, etc.
The lithium secondary battery of the present invention has excellent low-temperature cycle properties even when the charging final
voltage is 4.2 V or more, especially 4.3 V or more, and further, the characteristics of the battery are still good even at 4.4 V or more. The discharging final voltage could be generally 2.8 V or more, further 2.5 V or more. The lithium secondary battery of the present invention could be at 2.0 V or more. The current value is not specifically defined. In general, the battery is used in a range of from 0.1 to 10 C. The lithium battery of the present invention can be charged/discharged at -40 to 100°C, preferably at -10 to 80°C.
In the present invention, as a countermeasure against the increase in the internal pressure of the lithium secondary battery, there may be employed a method of providing a safety valve in the battery cap or a method of forming a cutout in the battery component such as the battery can, the gasket or the like. In addition, as a safety countermeasure against overcharging, a current breaker capable of detecting the internal pressure of the battery to cut off the current may be provided in the battery cap.

### (Lithium Primary Battery)

Not specifically defined, the configuration of the lithium primary battery may be similar to that of the above-mentioned lithium secondary battery except for the constitution specific to lithium primary batteries.
For the positive electrode for the lithium primary battery, there are mentioned oxides or chalcogen compounds of one or more metal elements such as CuO, Cu₂O, Ag₂O, Ag₂CrO₄, CuS, CuSO₄, TiO₂, TiS₂, SiO₂, SnO, V₂O₅, V₆O₁₂, VOₓ, Nb₂O₅, Bi₂O₃, Bi₂Pb₂O₅, Sb₂O₃, CrO₃, Cr₂O₃, MoO₃, WO₃, SeO₂, MnO₂, Mn₂O₃, Fe₂O₃, FeO, Fe₃O₄, Ni₂O₃, NiO, CoO₃, CoO, etc.; sulfur compounds such as SO₂, SOCl₂, etc.; carbon fluorides (fluorographite) represented by a general formula (CFₓ)ₙ, etc. Of those, preferred are MnO₂, V₂O₅, fluorographite, etc.
As the negative electrode active material for the lithium primary battery, usable are lithium metal, lithium alloys, etc.

### [The Second Electrochemical Element (electric double-layer capacitor)]

This is an electrochemical element that stores energy by utilizing the electric double layer capacitance in the interface between the electrolytic solution and the electrode therein. One example of the present invention is an electric double layer capacitor. The most typical electrode active material to be used in the electrochemical element is active carbon.

### [The Third Electrochemical Element]

This is an electrochemical element that stores energy by utilizing the doping/dedoping reaction of the electrode therein. As the electrode active material for use in the electrochemical element, there may be mentioned metal oxides such as ruthenium oxide, iridium oxide, tungsten oxide, molybdenum oxide, copper oxide, etc.; π-conjugated polymers such as polyacene, polythiophene derivatives, etc.

### [The Fourth Electrochemical Element (lithium ion capacitor)]

This is an electrochemical element that stores energy by utilizing the lithium ion intercalation into the carbon material such as graphite or the like of the negative electrode therein. This may be referred to as a lithium ion capacitor (LIC). As the positive electrode, for example, there may be mentioned one that utilizes the electric double layer between the active carbon electrode and the electrolytic solution therein, or one that utilizes the doping/dedoping reaction of the π-conjugated polymer electrode therein. The electrolytic solution contains at least a lithium salt such as LiPF₆ or the like.

### EXAMPLES

Examples of using the nonaqueous electrolytic solution of the present invention are shown below. However, the present invention is not limited to these Examples.

### Examples 1 to 8, and Comparative Examples 1 to 3

### [Production of Lithium Ion Secondary Battery]

94% by mass of LiNi_{0.8}Co_{0.15}Al_{0.05}O₂ (positive electrode active material, of which the pH at room temperature of the supernatant prepared by dispersing 10 g of the positive electrode active material in 100 ml of distilled water is 11.8) and 3% by mass of acetylene black (electroconductive agent) were mixed, and added to and mixed in a solution previously prepared by dissolving 3% by mass of polyvinylidene fluoride (binder) in 1-methyl-2-pyrrolidone, thereby preparing a positive electrode mixture paste. The positive electrode mixture paste was applied on one surface of an aluminium foil (collector), then dried, processed under pressure and blanked into a predetermined size, thereby producing a positive electrode sheet. The density of the part of the positive electrode except the collector was 3.6 g/cm³. On the other hand, 95% by mass of artificial graphite (d₀₀₂ = 0.335 nm, negative electrode active material) was added to and mixed in a solution previously prepared by dissolving 5% by mass of polyvinylidene fluoride (binder) in 1-methyl-2-pyrrelidone, thereby preparing a negative electrode mixture paste. The negative electrode mixture paste was applied onto one surface of a copper foil (collector), dried, processed under pressure and blanked into a predetermined size, thereby producing a negative electrode sheet. The density of the part of the negative electrode except the collector was 1.5 g/cm³. X-ray diffractometry of the electrode sheet gave I (110) /I (004) = 0.1. The positive electrode sheet, a porous polyethylene film separator and the negative electrode sheet were laminated in that order, and a nonaqueous electrolytic solution having the composition shown in Table 1 was added thereto to construct a 2032-type coin battery.
The battery production conditions and the battery characteristics are shown in Table 1.
In the Table, the meanings of the abbreviations of the solvents are as follows.
TMGS: trimethylene glycol sulfite
FEC: 4-fluoro-1,3-dioxolan-2-one
PC: propylene carbonate
EC: ethylene carbonate
VC: vinylene carbonate
MEC: methyl ethyl carbonate
DMC: dimethyl carbonate

### [Evaluation of Low-Temperature Cycle Properties]

In a thermostatic chamber kept at 25°C, the battery fabricated according to the above-mentioned method was charged up to a final voltage of 4.2 V with a constant current of 1 C and under a constant voltage for 3 hours, and thereafter discharged under a constant current of 1 C to a final voltage of 2.75 V as a precycle.
Next, in a thermostatic chamber at 0°C, this was charged up to a final voltage of 4.2 V with a constant current of 1 C and under a constant voltage for 3 hours, and thereafter discharged under a constant current of 1 C to a final voltage of 2.75 V. The cycle was repeated up to 50 cycles. According to the formula mentioned below, the discharge capacity retention rate (%) after 50 cycles was calculated. Discharge Capacity Retention Rate (%) = (discharge capacity at 50th cycle/discharge capacity at 1st cycle) x 100.

[Table 1]

**Table 1**

| | Composition of Electrolyte Salt Composition of Nonaqueous Electrolytic Solution (ratio by volume of solvents) | TMGS Amount Added*1 (mass%) | Second Additive Amount Added*2 (mass%) | Discharge Capacity Retention Rate (%) |
|---|---|---|---|---|
| Example 1 | 1M LiPF₆ FEC/PC/MEC/DMC (20/10/35/35) | 0.1 | - | 73 |
| Example 2 | 1M LiPF₆ FEC/PC/MEC/DMC (20/10/35/35) | 0.5 | - | 77 |
| Example 3 | 1M LiPF₆ FEC/PC/MEC/DMC (20/10/35/35) | 3 | - | 74 |
| Example 4 | 1M LiPF₆ FEC/EC/VC/MEC/DMC (8/20/2/35/35) | 0.5 | - | 71 |
| Example 5 | 1M LiPF₆ FEC/EC/VC/MEC/DMC (18/10/2/35/35) | 0.5 | - | 75 |
| Example 6 | 1M LiPF₆ PEC/PC/VC/MEC/DMC (23/5/2/35/35) | 0.5 | - | 79 |
| Example 7 | 0.95M LiPF₆ + 0.05M LiN(SO₂CF₃)₂ FEC/PC/VC/MEC/DMC (23/5/2/35/35) | 0.5 | - | 81 |
| Example 8 | 1M LiPF₆ FEC/PC/VC/MEC/DMC (23/5/2/35/35) | 0.5 | 2-propynyl methanesulfonate (1) | 83 |
| Comparative Example 1 | 1M LiPF₆ FEC/PC/MEC/DMC (20/10/35/35) | - | - | 63 |
| Comparative Example 2 | 1M LiPF₆ EC/MEC/DMC (30/35/35) | 0.5 | - | 60 |
| Comparative Example 3 | 1M LiPF₆ FEC/PC/MEC/DMC (40/10/25/25) | 0.5 | - | 59 |

| | | | | |
|---|---|---|---|---|
| *1: Content of trimethylene glycol sulfite in nonaqueous electrolytic solution *2: Content in nonaqueous electrolytic solution | | | | |

### Example 9 and Comparative Example 4

A negative electrode sheet was produced, using Si (negative electrode active material) in place of the negative electrode active material used in Example 2 and Comparative Example 1. Precisely, 80% by mass of Si and 15% by mass of acetylene black (electroconductive agent) were mixed, and added to and mixed in a solution previously prepared by dissolving 5% by mass of polyvinylidene fluoride (binder) in 1-methyl-2-pyrrolidone, thereby preparing a negative electrode mixture paste. The negative electrode mixture paste was applied onto a copper foil (collector), dried, processed under pressure, and blanked into a predetermined size, thereby producing a negative electrode sheet. Coin batteries were produced and evaluated in the same manner as in Example 2 and Comparative Example 1, except that the negative electrode sheet produced herein was used. The results are shown in Table 2.

[Table 2]

**Table 2**

| | Composition of Electrolyte Salt Composition of Nonaqueous Electrolytic Solution (ratio by volume of solvents) | TMGS Amount Added*1 (mass%) | Discharge Capacity Retention Rate (%) |
|---|---|---|---|
| Example 9 | 1M LiPF₆ FEC/PC/MEC/DMC (20/10/35/35) | 0.5 | 61 |
| Comparative Example 4 | 1M LiPP₆ FEC/PC/MEC/DMC (20/10/35/35) | - | 45 |

| | | | |
|---|---|---|---|
| *1: Content of trimethylene glycol sulfite in nonaqueous electrolytic solution | | | |

### Example 10 and Comparative Example 5

A positive electrode sheet was produced by changing the positive electrode active material used in Example 2 and Comparative Example 1 to LiFePO₄ (positive electrode active material) coated with amorphous carbon. Concretely, 90% by mass of LiFePO₄ coated with amorphous carbon and 5% by mass of acetylene black (electroconductive agent) were mixed, and added to and mixed in a solution previously prepared by dissolving 5% by mass of polyvinylidene fluoride (binder) in 1-methyl-2-pyrrolidone, thereby preparing a positive electrode mixture paste. The positive electrode mixture paste was applied onto an aluminium foil (collector), dried, processed under pressure and blanked into a predetermined size, thereby producing a positive electrode sheet. Coin batteries were produced and evaluated in the same manner as in Example 2 and Comparative Example 1, except that the positive electrode sheet thus produced herein was used and that the charging final voltage was changed to 3.6 V and the discharging final voltage was changed to 2.0 V. The results are shown in Table 3.

[Table 3]

**Table 3**

| | Composition of Electrolyte Salt Composition of Nonaqueous Electrolytic Solution (ratio by volume of solvents) | TMGS Amount Added*1 (mass%) | Discharge Capacity Retention Rate (%) |
|---|---|---|---|
| Example 10 | 1M LiPF₆ FEC/PC/MEC/DMC (20/10/35/35) | 0.5 | 80 |
| Comparative Example 5 | 1M LiPF₆ FEC/PC/MEC/DMC (20/10/35/35) | - | 63 |

| | | | |
|---|---|---|---|
| *1: Content of trimethylene glycol sulfite in nonaqueous electrolytic solution | | | |

From Table 1, it is known that the lithium secondary batteries of Examples 1 to 8 were all remarkably bettered in point of the low-temperature cycle properties, as compared with the lithium secondary battery of Comparative Example 1 in which no additive was added to the nonaqueous electrolytic solution, the lithium secondary battery of Comparative Example 2 in which trimethylene glycol sulfite (TMGS) was added to the nonaqueous electrolytic solution where the nonaqueous solvent contains one cyclic carbonate alone, and the lithium secondary battery of Comparative Example 3 in which the content of the cyclic carbonate having a fluorine atom at least at 4-position of ethylene carbonate (FEC) is more than 40% by volume of the total volume of the nonaqueous solvent. From this, it is known that the effect of the present invention is specific to the nonaqueous electrolytic solution combined with trimethylene glycol sulfite, in which the solvent contains two cyclic carbonates and contains a cyclic carbonate having a methyl group or a fluorine atom at least at 4-position of ethylene carbonate in a ratio of from 1 to 30% by volume of the total volume of the nonaqueous solvent.
In addition, from comparison between Example 9 and Comparative Example 4 in Table 2, and from comparison between Example 10 and Comparative Example 5 in Table 3, the same effect is seen in the case where Si was used as the negative electrode and in the case where a lithium-containing olivine-type iron phosphate was used as the positive electrode. Accordingly, it is obvious that the effect of the present invention does not depend on any specific positive electrode or negative electrode.
In addition, the nonaqueous electrolytic solution of the present invention has an effect of improving the low-temperature load characteristics of lithium primary batteries.

### INDUSTRIAL APPLICABILITY

Using the nonaqueous electrolytic solution of the present invention provides an electrochemical element excellent in low-temperature cycle properties.

## Claims

1. A nonaqueous electrolytic solution of an electrolyte salt dissolved in a nonaqueous solvent, in which the nonaqueous solvent contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, and the content of the cyclic carbonate having a methyl group at least at 4-position of ethylene carbonate and/or the cyclic carbonate having a fluorine atom at least at 4-position of ethylene carbonate is from 1 to 40% by volume of the total volume of the nonaqueous solvent, and which contains trimethylene glycol sulfite in an amount of from 0.1 to 5% by mass.

2. The nonaqueous electrolytic solution according to claim 1, wherein the cyclic carbonate having a methyl group at least at 4-position of ethylene carbonate is propylene carbonate and/or 2,3-butylene carbonate.

3. The nonaqueous electrolytic solution according to claim 1 or 2, wherein the cyclic carbonate having a fluorine atom at least at 4-position of ethylene carbonate is 4-fluoro-1,3-dioxolan-2-one and/or 4,5-difluoro-1,3-dioxolan-2-one.

4. The nonaqueous electrolytic solution according to any of claims 1 to 3, wherein the nonaqueous solvent contains a linear ester.

5. The nonaqueous electrolytic solution according to any of claims 1 to 4 wherein the electrolyte salt is at least one selected from LiPF₆, LiBF₄, LiN(SO₂CF₃)₂ and LiN(SO₂C₂F₅)₂.

6. An electrochemical element comprising a positive electrode, a negative electrode, and a nonaqueous electrolytic solution of an electrolyte salt dissolved in a nonaqueous solvent, wherein the nonaqueous solvent in the nonaqueous electrolytic solution contains at least two cyclic carbonates selected from ethylene carbonate, 1,2-butylene carbonate, a cyclic carbonate having a methyl group at least at 4-position of ethylene carbonate, and a cyclic carbonate having a fluorine atom at least at 4-position of ethylene carbonate, the content of the cyclic carbonate having a methyl group at least at 4-position of ethylene carbonate and/or the cyclic carbonate having a fluorine atom at least at 4-position of ethylene carbonate in the nonaqueous solvent is from 1 to 40% by volume of the total volume of the nonaqueous solvent, and the nonaqueous electrolytic solution contains trimethylene glycol sulfite in an amount of from 0.1 to 5% by mass.
